# EUROPEAN PATENT APPLICATION

(11) **EP 1 115 077 A2**
(43) Date of publication of application: **11.07.2001**
(21) Application number: 00830715.9
(22) Date of filing: 30.10.2000
(51) Int. Cl.: G06F 17/60

(54) **A system wich permits customers orientation while looking for products in commercial structures and to find stands or other structures in exhibition fairs and other activities**

(30) Priority: 07.01.2000 IT RI000001
(71) Applicant: Mestichelli, Giovanni, 02100 Rieti (IT)
(72) Inventor: Mestichelli, Giovanni, 02100 Rieti (IT)

(57) **Abstract**

The patent allows supermarket customers and visitors to exhibitions, fairs or shows to quickly find the goods to buy or the stands to visit, avoiding pointless routes, loss of time and irritation, especially for those who only have a short time to make their purchase.

This system also gives the certainty to find the products, satisfying the customers, who will happily return to the Commercial Center, and satisfying the trader as he sees his income increasing.

The patent consists in a Mobile Device, at the customer's disposal, and a Computerized Central System that manages the topographic data of the structure, the commodity data of the products and their location among the stands, and also the air born dialogue between the transceivers and the mentioned components.

The mobile device at the customer's disposal will acquire the data by means of an alphanumerical keyboard or by digital icons or by a precompiled card reader.

The Central System will acquire the data and then supply the mobile device the sequence of the goods for sale, giving the location by alphanumerical coordinates or dynamically by a route or four right angled arrows on a display; this system is defined as, air born dialogue.

The system can also be independent with an internal memory which can be programmed by an entry gate connected to a central computer that will forward the necessary data.

The system is applicable to all the structures that foresee a distribution of products and activities over an extensive range where customers have to be given a suitable instrument which will allow them to orientate and therefor satisfy their necessities.

## Description

A system which permits customers orientation while looking for products in commercial structures and to find stands or other structures in exhibitions fairs and other activities.

### Bachkground art

Nowadays, commercial sales and display activities (supermarkets, exhibitions, fairs etc.) use written orientation systems, multiple and in groups, that are not always in visible positions and often not clear.

This method, for the people involved (customers and traders) produces considerable negative effects:
- Unnecessary and winding routes in the search.
- Considerable loss of time.
- Increase in crowding (chaos, especially in peak hours).
- Customer irritability.
- Giving up the search.
- Lost purchases.
- Lost customers.
- Lost income.

### Disclosure of invention

Analysis of the objectives reached with this patent:
- Speed in the search.
- Time reduction.
- Certainty in the location of the products.
- Customer satisfaction.
- Insertion of a playful component.
- Elimination of giving up the search.
- The possibility to progressively calculate the shopping costs.
- Increase in sales.
- Increase in income.
- Certainty in customer satisfaction.
- The purpose of the patent system, for instance in a sales structure, allows an independent recording of the purchases made.
   By matching the prices and the products it is possible to progressively calculate the total amount of the purchases made.
   Furthermore, by the application of a bar code scanner to the same system the customers can independently calculate the goods bought, opening therefor a new commercial concept: given such a demonstration of trust the customer will in turn respond in a faithful manner to the commercial center.
- Considerable reduction in queuing times at the cash desk.
- A more rational use of the personnel in service.

### Brief description of drawings

The drawings show:
Drawing 1/3 shows the mobile device used by the customer indicating the following features: (a) Digital icon ; (b) arrows to indicate the way to the customer ; (c) Display which indicates the product data to the customer ; (d) Alphanumeric keyboard with which the customer can enter the data of the goods to be purchased ; (e) Entry reader card precompiled by the customer for the purchases.
Drawing 2/3 shows the general picture of the orientation system within a commercial structure indicating the following features: (f) Central computerized system which manages all the topographic, and product data, (g) Radio transceiver of the central system; (p) Shelving for the products on sale, divided into sectors (a,b,c,d,e), (m) Radio transceiver placed near the shelving, (h) Mobile device used by the customer with a radio transceiver.
Drawing 3/3 shows the compiled card by the customer where the following points are indicated (1^{*}) space to indicate the product type ( this could be pre-stamped by the hypermarket) ; (2^{*}) space to select the customer's product choice; (3^{*}) space to indicate "follow on card" in case of more cards , (4^{*}) space for customer's confirmation on further compiled cards.

### Industrial applicability.

The pending patent system, which permits customer orientation when looking for goods in commercial structures or exhibitions stands etc., is realizable by using common electric, mechanic, electronic components and widely used software.

The pending patent can be realized by using different technologies and can be of the following types:

## Claims

1. Fixed to the customer's trolley carrying the chosen goods.

2. Applicable to the trolley on entry and removable at the exit.

3. Portable , like a notebook.

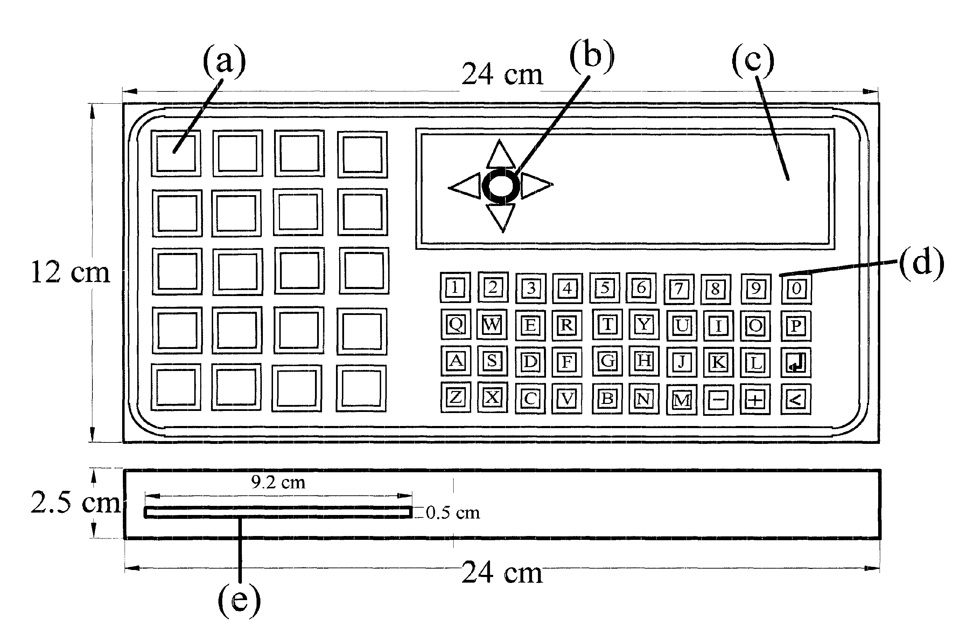

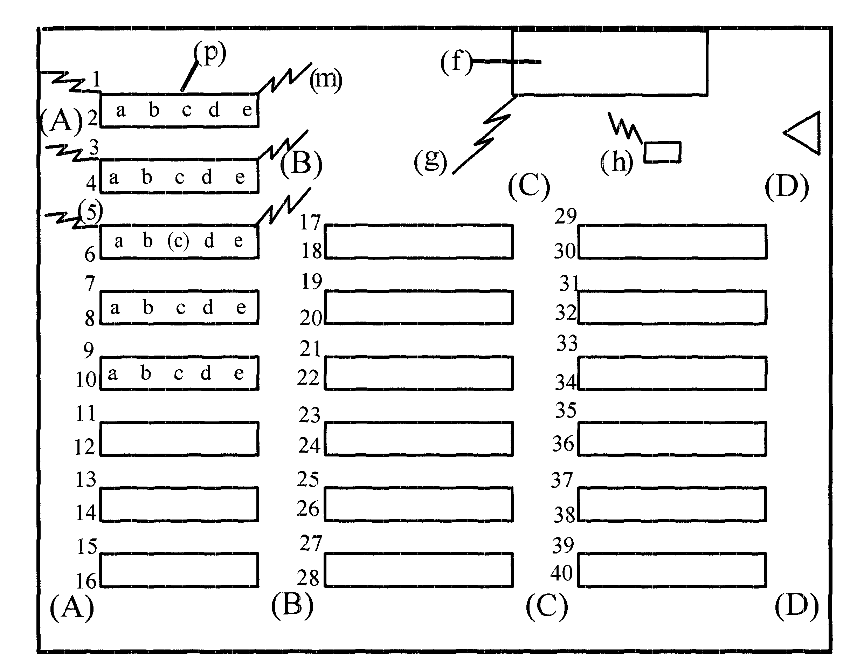

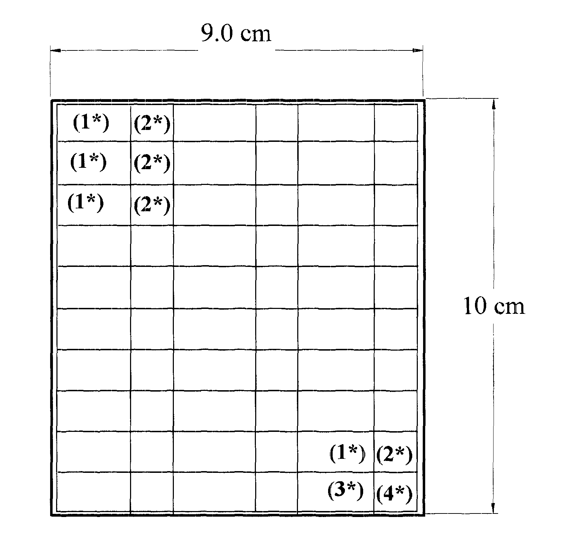

4. The pending patent is composed of:
• A device at the customer's disposal, composed of a programmable electronic system with an independent rechargeable power pack, provided with or without a radio transceiver, called Mobile device Fig. 1/3.
• The Mobile device at the customer's disposal is programmed through its memory entry gate, which connected to a computer, receives the topographic and commercial data each time these change.
• A central computerized system Fig. 2/3 (f) which manages:
a) The topographic data of the commercial structure or display stand, commodity data of the products, their position in the stands.
b) The air born dialogue, receiving and elaborating the radio signals emitted by the fixed positions Fig. 2/3 (m) where the products are situated and from the mobile device at the customer's disposal Fig.2/3(h), both in the initial interrogation phase and the reply phase by the central system to the mobile device.
• Fixed positions, composed of transceiver fitted to the shelves Fig. 2/3 (p) where the products are located or for the individual stand.
• A specific program for the data elaboration.
The system can be realized with the following functions:

5. Individual, with the mobile device provided with an internal programmable memory: all the product types, prices and their location in the area or in case of an exhibition or fair, the position of the stands, are registered in the memory.
The system is programmed to indicate on the display Fig. 1/3 (c) the orderly sequence output of the products on sale and their location in the commercial area or the output of the stands in an exhibition, also by alphanumerical or other types of coordinates.
In the case of commercial structures a progressive calculation of the purchased goods can be provided.

6. Air born dialogue: This is a central computerized system Fig. 2/3 (f) that possesses ail the topographic data of the commercial or exhibition structure, commodity data of the products, their location in the stands.
The central system controls the variable position of the customer and the fixed position of the product/stand, having, as a reference, on one side the signals emitted by the transceiver location the shelve Fig.2/3 (m) or on the stand, and the other the signals emitted by the system fixed to the trolley Fig.2/3 (h) or Mobile Device Fig. 1/3 at the customer's disposal.
To introduce, the relative purchasable product data, or the data referring to the stands to visit into the mobile device, different methods can be used and which can also be all simultaneously present in the system.

7. The data introduction can occur:
• By alphanumerical keyboards Fig 1/3 (d) or other types.
• By small digital pressure icons Fig. 1/3 (a), indicating the products or the company displaying the goods etc.
• By one or more cards Fig.3/3 that indicate the product types on sale. Fig.3/3 (1^{*}),or the companies in the exhibition.
• The cards Fig.3/3,can be compiled home by the customers Fig 3/3 (2^{*})(4^{*}),these also act as a pro memory or shopping list.
• These cards, introduced into the special reader Fig. 1/3 (e) of the mobile device Fig,1/3, permit the reader to display the data Fig. 3/3 (2^{*}) (4^{*}).
• Before proceeding, the system asks the customer if they want to input other data with the keyboard Fig.1/3 (d) (products and quantity).
The system arranges the purchasing sequence or sites and determines the shortest route from the entry point of the commercial structure or exhibition.
While moving along the route, the product data or the company name which you are heading towards will appear on the display Fig 1/3(c), giving you the coordinates and the direction to follow.
It will be possible to integrate the shopping list or the stands to visit at any moment.
The response given by the mobile device to the customer can be:

8. Alphanumerical: in the alphanumerical case, the response to the customer's question will consist in indicating, on a display Fig. 1/3 (c) the name of the product or the company, with the alphanumerical coordinates according to the prearranged topography (example. **A5c, B7n** etc. Fig.2/3 in which (A) indicates one of the main transit corridors; (5) the lateral corridor; (c) a sector in this area.

9. Dynamic : the system utilizes air born dialogues between the positions of the mobile devices Fig.2/3 (h), the central computer Fig.2/3(f) and the transceiver located on the shelves Fig.2/3(m), where the product is situated or on the stand.
The data response from the central system to the mobile device is expressed on a display or via alphanumerical coordinate indications or by other types or via dynamic graphic indications, for example :
a) by means of four right angled arrows Fig. 1/3 (b), one of which, flashing, indicates the direction to follow;
b) by means of a graphic signaling of the shortest route and the dynamic signaling of the customer's position; or by other logical forms that consent the orientation.
Meanwhile, the name of the product or the company towards which the customer is moving, will appear on the display Fig. 1/3 (c), and so on for all the products on sale or for the stands to visit.
Once you have reached the destination, the customer will be informed by a signal, for example optic, acoustic or another type.

10. Another type : Another type means any other symbolic form linguistic or game .
**In this way the customer will be guided towards the products with certainty and without wasting time, following the shortest route and with a game like participation that will also involve who is with them (husband, wife, children). Buying will therefor also be more enjoyable.**
